# NEUE EUROPÄISCHE PATENTSCHRIFT

(11) **EP 1 792 355 B2**
(45) Veröffentlichungstag und Bekanntmachung des Hinweises auf die Entscheidung über den Einspruch: **20.04.2022**
(45) Hinweis auf die Patenterteilung: 01.02.2012
(21) Anmeldenummer: 05760990.1
(22) Anmeldetag: 01.07.2005
(51) Int. Cl.: H01M 2/34, H01M 10/617, H01M 10/6235, H01M 10/643, H01M 10/653, H01M 10/6555, H01M 6/42, H01M 2/02

(54) **BATTERIEPACK**
BATTERY PACK
GROUPE DE BATTERIE

(30) Priorität: 10.09.2004 DE 102004043829
(43) Veröffentlichungstag der Anmeldung: 06.06.2007
(73) Patentinhaber: Robert Bosch GmbH, 70442 Stuttgart (DE)
(72) Erfinder: REJMAN, Marcin, 71322 Waiblingen (DE); MATTHIAS, Wolf, 70469 Stuttgart (DE)
(86) Internationale Anmeldenummer: PCT/EP2005/053140
(87) Internationale Veröffentlichungsnummer: WO 2006/027282

(56) Entgegenhaltungen:
- WO-A-02/03484
- WO-A-03/083961
- WO-A1-02/03484
- DE-A1- 10 106 810
- US-A- 4 007 315
- US-A- 4 007 315
- US-A- 5 227 263
- US-A1- 2002 125 860
- US-B1- 6 306 957
- US-B1- 6 692 864
- US-B1- 6 692 864

## Beschreibung

Die Erfindung betrifft einen Batteriepack zur Stromversorgung eines Elektrogeräts oder Elektrofahrzeugs, insbesondere eines Elektrowerkzeugs, gemäß dem Oberbegriff des Anspruchs 1, wobei die hier verwendeten Begriffe Batteriezelle und Batteriepack auch wiederaufladbare Stromspeicher (Akkus) bzw. Akkupacks umfassen sollen.

### Stand der Technik

Batteriepacks zur Stromversorgung von Elektrowerkzeugen oder anderen Elektrogeräten erwärmen sich infolge von hohen Nutzströmen im Betrieb. Insbesondere dann, wenn ein Teil der Batteriezellen des Batteriepacks keinen direkten Kontakt zu einer Außenwand eines Gehäuses des Batteriepacks hat, ist die Kühlung dieser inneren Zellen schlechter als diejenige der zur Außenwand benachbarten Zellen, da Verlustwärme infolge einer Leistungsumsetzung in den zuletzt genannten Zellen leichter durch die Gehäusewand an die Umgebung abgestrahlt werden kann. Durch die ungleiche Kühlung können die inneren bzw. äußeren Zellen unterschiedliche Wirkungsgrade besitzen, was wiederum zu einem Debalancieren, das heißt ungleichen Ladezuständen der Zellen und damit zu einer Überhitzung einzelner Zellen führen kann.

Als Maßnahme zur Vergleichmäßigung der Temperaturverteilung zwischen den Zellen eines Batteriepacks ist es bereits bekannt, in den Zwischenräumen zwischen benachbarten Zellen metallische Wärmeausgleichselemente anzuordnen, welche für einen besseren Wärmeausgleich zwischen den Zellen sorgen. Vorzugsweise werden diese Wärmeausgleichselemente von Aluminiumkörpern gebildet, die eine ausgezeichnete Wärmeleitfähigkeit mit einem relativ geringen spezifischen Gewicht vereinen. Allerdings haben diese metallischen Wärmeausgleichselemente den Nachteil, dass sich in den Zwischenräumen zwischen den Zellen elektrisch leitende Körper befinden, die ggf. durch Vibrationen oder Stöße in Kontakt mit stromführenden, die Zwischenräume überbrückenden Zellenverbindern gelangen und Kurzschlüsse zwischen diesen verursachen können. Um dies zu verhindern, ist eine sehr sichere Lagerung der Wärmeausgleichselemente im Gehäuse erforderlich. Trotz einer derartigen Maßnahme kann es jedoch zum Beispiel infolge einer vibrations- oder stoßbedingten Beschädigung der typischerweise aus Papier bestehenden Isolation benachbarter Zellen zum Auftreten von Kurzschlüssen über die Wärmeausgleichselemente kommen. Darüber hinaus besitzen selbst aus Aluminium hergestellte Wärmeausgleichselemente ein nicht unbeträchtliches Gewicht, was sich besonders bei tragbaren Elektrogeräten und speziell bei handgeführten Elektrowerkzeugen nachteilig bemerkbar macht.

DE 101 06 810 A1 offenbart ein Batteriepack mit einer Mehrzahl von Batteriezellen und mindestens einem in einem Zwischenraum zwischen zwei benachbarten Batteriezellen angeordneten Wärmeausgleichselement, welches vorzugsweise als Metallteil mit hoher Wärmekapazität ausgebildet ist oder aus hochgradig mit Kupfer- oder Aluminiumteilchen gefüllten Polymeren gebildet ist.

US 5,338,624 offenbart ein flaches Batteriepack mit aufladbaren Batteriezellen, wobei die Batteriezellen zueinander durch Abstandselemente oder durch Kühlelemente getrennt sind, die eine Kühlung der Batteriezellen ermöglichen.

### Vorteile der Erfindung

Demgegenüber bietet der erfindungsgemäße Batteriepack mit den im Anspruch 1 genannten Merkmalen den Vorteil, dass die aus einem Kunststoffmaterial hergestellten Wärmeausgleichselemente verglichen mit metallischen Wärmeausgleichselementen leichter, elektrisch isolierend und zudem preisgünstiger sind. Außerdem sind Kunststoffmaterialien im Allgemeinen weicher als Metalle und schmiegen sich dadurch besser an die Umfangsflächen der Zellen an. Bei Verwendung von thermoplastischen Kunststoffen können die Wärmeausgleichselemente zudem als Formteile durch Spritzgießen oder Extrudieren gefertigt werden, wodurch sich außer einer sehr preisgünstigen Herstellung auch noch eine optimal an die Querschnittsform der Zwischenräume zwischen den Zellen angepasste Querschnittsform verwirklichen lässt. Weiter besitzen Kunststoffe in der Regel einen höheren Wärmedehnungskoeffizienten als Metalle, so dass sie sich bei einer Erwärmung der Zellen stärker ausdehnen und somit noch besser an die Zellen anschmiegen, wodurch gerade im Bedarfsfall, nämlich bei einer starken Wärmeerzeugung, ein verbesserter Wärmeübergang erreicht werden kann. Nicht zuletzt kann durch die Herstellung der Wärmeausgleichselemente aus Kunststoff ins Auge gefasst werden, die Batteriezellen selbst in Zukunft ohne eigene Isolierung auszuführen, deren Aufgabe dann von den Kunststoffwärmeausgleichselementen übernommen wird. Mit der Isolierung der Zellen könnte ein weiterer Engpass bei der Wärmeübertragung beseitigt und das Potenzial für einen Wärmeausgleich weiter verbessert werden.

Eine bevorzugte Ausgestaltung der Erfindung sieht vor, dass als Kunststoffmaterial zur Herstellung der Wärmeausgleichselemente ein thermoplastisches Polyolefin, bevorzugt ein Polyethylen und am besten Polyethylen hoher Dichte (PE-HD) verwendet wird, da die Wärmeleitfähigkeit des letzteren mit einem Wert von etwa 0,40 bis 0,42 W/mK den Bereich einer maximalen inneren Wärmeleitfähigkeit der meisten Zellen erreicht. Wie rechnerisch und durch Untersuchungen festgestellt wurde, reicht der Bereich der maximalen oder Grenz-Wärmeleitfähigkeit im Inneren von Batteriezellen in der Regel von etwa 0,4 bis 0,5 W/mK, so dass eine über diesen Wertebereich hinaus gehende Wärmeleitfähigkeit der Wärmeausgleichselemente keine nennenswerten Vorteile für die Wärmeabfuhr bringt.

Die erfindungsgemäße Ausgestaltung sieht daher vor, dass die Wärmeausgleichselemente je nach Art der verwendeten Batteriezellen eine Wärmeleitfähigkeit von 0,4 bis 0,5 W/mK besitzen.

Gemäß einer anderen bevorzugte Alternative der Erfindung kann das Wärmeausgleichselement auch aus einem elastomeren Kunststoffmaterial bestehen, das sich noch besser als thermoplastische Kunststoffe an die Umfangsflächen der Batteriezellen anschmiegt und damit nicht nur den Wärmeübergang verbessert, sondern gleichzeitig auch noch das Einführen der Zellen erleichtert und für eine ausgezeichnete Vibrationsdämpfung derselben sorgt.

Erfindungsgemäß wird außerdem nicht nur das Material des Wärmeausgleichselements so gewählt, dass dieses sich formschlüssig an die Umfangsflächen der Batteriezellen anlegt und einen Toleranzausgleich bewirkt, sondern auch sein Querschnitt so gewählt, dass er über den größten Teil seiner Länge komplementär zum Querschnitt des Zwischenraums zwischen den Zellen ist, so dass es diesen im Wesentlichen vollständig ausfüllt. Angrenzend an eines oder beide seiner Stirnenden kann das Wärmeausgleichselement jedoch einen kleineren Querschnitt aufweisen, um einen Kontakt mit einem den Zwischenraum überbrückenden Zellenverbinder zu verhindern.

### Zeichnung

Die Erfindung wird nachfolgend in einem Ausführungsbeispiel anhand der zugehörigen Zeichnung näher erläutert. Es zeigt:

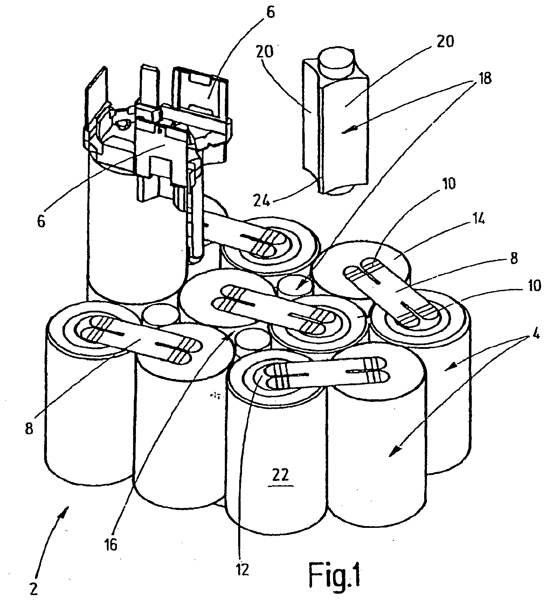

Fig. 1: eine teilweise auseinandergezogene perspektivische Ansicht eines Teils eines Batteriepacks ohne Gehäuse.

### Beschreibung des Ausführungsbeispiels

Der in der Zeichnung ohne Gehäuse dargestellte Batteriepack 2 dient als Stromversorgung für ein Elektrogerät, wie beispielsweise ein handgeführtes Elektrowerkzeug (nicht dargestellt). Er besteht im Wesentlichen aus dem aus einem Kunststoffmaterial hergestellten Gehäuse (nicht dargestellt), einer oder mehreren Lagen (nur teilweise dargestellt) von einzeln nebeneinander im Gehäuse angeordneten Batteriezellen 4, sowie einem Verschluss (nicht dargestellt), der das Gehäuse am Stirnende der obersten Lage von Zellen 4 verschließt. Der in der Regel von einem Teil des Elektrogeräts gebildete Verschluss umfasst zwei Kontakte, die beim Verschließen des Gehäuses mit Anschlusskontakten 6 des Batteriepacks 2 in Berührung treten, um die im Gehäuse untergebrachten, in Reihe oder parallel geschalteten Zellen 4 mit einem Stromkreis des Verbrauchers des Elektrogeräts zu verbinden.

Der dargestellte Batteriepack 2 enthält in einer Lage insgesamt elf zylindrische Batteriezellen 4, die zum Teil in einer lockereren Viereckspackung und zum Teil in einer dichteren Dreieckspackung angeordnet sind, wobei bei der ersteren die Mittelachsen von vier benachbarten Zellen 4 die Ecken eines Quadrates und bei der letzteren die Mittelachsen von drei benachbarten Zellen 4 die Ecken eines gleichseitigen Dreiecks bilden. Oberhalb von den oberen Stirnenden der Zellen 4 ist eine Reihe von H-förmigen Zellenverbindern 8 aus einem elektrisch leitendem Metallblech angeordnet, die jeweils zwei benachbarte Zellen 4 in Reihe miteinander verbinden und deren freie Schenkel 10 paarweise gegen Kontaktflächen 12, 14 an den entgegengesetzt gepolten Stirnenden dieser Zellen 4 anliegend angebracht werden.

Um die bei der Leistungsumsetzung in den weiter vom Gehäuse entfernten inneren Batteriezellen 4 jeder Lage freigesetzte Verlustwärme schneller an die Umgebung abzuführen und die Kühlung dieser Zellen 4 zu verbessern, sind in den Zwickeln 16 zwischen den in Viereckspackung angeordneten Zellen 4 jeder Lage jeweils Wärmeausgleichselemente 18 angeordnet, die für eine Vergleichmäßigung der Wärmeverteilung zwischen den Zellen 4 sorgen, wodurch ungleiche Wirkungsgrade unter den Zellen 4 einer Lage und damit ein Debalancieren der Zellen verhindert werden kann.

Die Wärmeausgleichselemente 18 weisen eine der Länge der Zellen 4 entsprechende Länge und über den Großteil ihrer Länge einen an die Form des Zwickels 16 zwischen den Zellen 4 angepassten Querschnitt auf. Im Bereich dieses angepassten Querschnitts werden die Wärmeausgleichselemente 18 im Wesentlichen von vier konkaven teilzylindrischen Seitenflächen 20 begrenzt, deren Krümmungsradien dem Krümmungsradius der zylindrischen Umfangsflächen 22 der Zellen 4 entsprechen. Um eine Beschädigung der Isolation der Zellen 4 durch scharfe Kanten zwischen den benachbarten Seitenflächen 20 zu vermeiden, sind diese an ihren einander zugewandten Rändern durch schmale Stirnflächen 24 getrennt, die zudem etwas gerundet sein können. Angrenzend an ihr oberes und unteres Stirnende weisen die Wärmeausgleichselemente 18 einen kleineren zylindrischen Querschnitt auf, so dass sie dort einen ausreichenden seitlichen Abstand von den Zellenverbindern 8 einhalten. Dies verhindert zum Beispiel im Falle einer axialen Verlagerung eines Wärmeausgleichselements 18 infolge eines zwischen die Zellen 4 eingedrungenen Fremdkörpers eine Beeinträchtigung des Kontakts zwischen einer benachbarten Zelle 4 und einem gegen diese anliegenden Zellenverbinder 8.

In den Zwickeln zwischen den in Dreieckspackung angeordneten Zellen 4 jeder Lage können ebenfalls Wärmeausgleichselemente (nicht dargestellt) angeordnet sein, deren Querschnitt dem Querschnitt dieser Zwickel entspricht.

Die Wärmeausgleichselemente 18 werden als Einzelteile durch Spritzgießen aus Polyethylen hoher Dichte (PE-HD) hergestellt, dessen Wärmeleitfähigkeit mit etwa 0,4 bis 0,42 W/mK einen Wert besitzt, der mit der Wärmeleitfähigkeit der Zellen 4 selbst von 0,4 bis 0,5 W/mK vergleichbar ist. Infolge ihrer Herstellung aus dem elektrisch nicht-leitenden Polyethylen stellen diese Wärmeausgleichselemente 18 selbst bei einer Beschädigung der Isolierung der Zellen 4 sicher, dass es nicht zu Kurzschlüssen zwischen den Zellen 4 kommt. Darüber hinaus weist Polyethylen hoher Dichte (PE-HD) einen relativ hohen Elastizitätsmodul von 1350 MPa nach ISO 1183 und einen im Vergleich zu Metallen größeren Wärmedehnungskoeffizienten auf, so dass sich die aus diesem Material hergestellten Wärmeausgleichselemente 18 bei einer Erwärmung stärker metallische Wärmeausgleichselemente ausdehnen und eng gegen die benachbarten Zellen 4 anlegen. Dabei werden ggf. vorhandene kleine Luftspalte zwischen den gegen die Umfangsflächen 22 der Zellen 4 anliegenden Seitenflächen 20 der Wärmeausgleichselemente 18 geschlossen und dadurch der Wärmeübergang aus den Zellen 4 in die Wärmeausgleichseleniente 18 besonders dann verbessert, wenn dies zur Vermeidung einer Überhitzung oder einem Debalancieren der Zellen 4 am notwendigsten ist.

## Patentansprüche

1. Batteriepack zur Stromversorgung eines Elektrogeräts oder Elektrofahrzeugs, insbesondere eines Elektrowerkzeugs, mit einer Mehrzahl von Batteriezellen und mindestens einem in einem Zwischenraum zwischen benachbarten Batteriezellen angeordneten Wärmeausgleichselement, **dadurch gekennzeichnet, dass** das Wärmeausgleichselement (18) aus einem Kunststoffmaterial besteht, welches eine Wärmeleitfähigkeit von 0,4 bis 0,5 W/mK besitzt, wobei die Wärmeleitfähigkeit im Bereich der maximalen Wärmeleitfähigkeit im Inneren der Batteriezellen (4) liegt, wobei der Querschnitt des Wärmeausgleichselements über den größten Teil seiner Länge komplementär zum Querschnitt des Zwischenraums zwischen den Zellen ist, so dass es diesen im Wesentlichen vollständig ausfüllt.

2. Batteriepack nach Anspruch 1, **dadurch gekennzeichnet, dass** das Kunststoffmaterial ein Polyolefin ist.

3. Batteriepack nach Anspruch 2, **dadurch gekennzeichnet, dass** das Kunststoffmaterial ein Polyethylen ist.

4. Batteriepack nach Anspruch 3, **dadurch gekennzeichnet, dass** das Kunststoffmaterial Polyethylen hoher Dichte (PE-HD) ist.

5. Batteriepack nach Anspruch 1, **dadurch gekennzeichnet,** das Wärmeausgleichselement aus einem elastomeren Kunststoffmaterial besteht.

6. Batteriepack nach Anspruch 1, **dadurch gekennzeichnet, dass** das Wärmeausgleichselement aus einem plastisch verformbaren Kunststoffmaterial besteht.

7. Batteriepack nach Anspruch 1, **dadurch gekennzeichnet, dass** das Kunststoffmaterial eine Vergussmasse bildet.

## Claims

1. Battery pack for supplying power to an electrical appliance or an electric vehicle, in particular a power tool, comprising a plurality of battery cells and at least one heat equalizing element arranged in an intermediate space between neighbouring battery cells, **characterized in that** the heat equalizing element (18) consists of a plastics material which has a thermal conductivity of 0.4 to 0.5 W/mK, the thermal conductivity lying in the range of the maximum thermal conductivity inside the battery cells (4), the cross section of the heat equalizing element over the greatest part of its length complementing the cross section of the intermediate space between the cells, so that it fills them substantially completely.

2. Battery pack according to Claim 1, **characterized in that** the plastics material is a polyolefin.

3. Battery pack according to Claim 2, **characterized in that** the plastics material is a polyethylene.

4. Battery pack according to Claim 3, **characterized in that** the plastics material is high-density polyethylene (HDPE).

5. Battery pack according to Claim 1, **characterized in that** the heat equalizing element consists of an elastomeric plastics material.

6. Battery pack according to Claim 1, **characterized in that** the heat equalizing element consists of a plastically deformable plastics material.

7. Battery pack according to Claim 1, **characterized in that** the plastics material forms a casting compound.

## Revendications

1. Bloc-batterie destiné à l'alimentation en courant d'un appareil électrique ou d'un véhicule électrique, en particulier d'un outil électrique, comprenant une pluralité de cellules de batterie et au moins un élément d'équilibrage de la température disposé dans un espace intermédiaire entre des cellules de batterie adjacentes, **caractérisé en ce que** l'élément d'équilibrage de la température (18) est constitué d'une matière plastique qui possède une conductivité thermique de 0,4 à 0,5 W/mK, la conductivité thermique se situant dans la plage de la conductivité thermique maximale à l'intérieur des cellules de batterie (4), la section transversale de l'élément d'équilibrage de la température étant, sur la plus grande partie de sa longueur, complémentaire à la section transversale de l'espace intermédiaire entre les cellules, de sorte qu'il remplit essentiellement totalement celui-ci.

2. Bloc-batterie selon la revendication 1, **caractérisé en ce que** la matière plastique est une polyoléfine.

3. Bloc-batterie selon la revendication 2, **caractérisé en ce que** la matière plastique est un polyéthylène.

4. Bloc-batterie selon la revendication 3, **caractérisé en ce que** la matière plastique est un polyéthylène haute densité (PEHD).

5. Bloc-batterie selon la revendication 1, **caractérisé en ce que** l'élément d'équilibrage de la température est constitué d'une matière plastique élastomère.

6. Bloc-batterie selon la revendication 1, **caractérisé en ce que** l'élément d'équilibrage de la température est constitué d'une matière plastique déformable plastiquement.

7. Bloc-batterie selon la revendication 1, **caractérisé en ce que** la matière plastique forme une masse de coulage.
